# EUROPEAN PATENT SPECIFICATION

(11) **EP 3 287 393 B1**
(45) Date of publication and mention of the grant of the patent: **03.11.2021**
(21) Application number: 16783134.6
(22) Date of filing: 19.04.2016
(51) Int. Cl.: B65D 90/00, B60P 7/13, B65D 88/12

(54) **CONTAINER SECURING DEVICE**
BEHÄLTERSICHERUNGSVORRICHTUNG
DISPOSITIF DE FIXATION DE CONTENANT

(30) Priority: 22.04.2015 JP 2015087622
(43) Date of publication of application: 28.02.2018
(60) Divisional application: 21189753.3
(73) Proprietor: Minato Seiki Iron Works Co., Ltd., Takatsuki City, Osaka 569-0832 (JP)
(72) Inventor: TAKAGUCHI Hiroyuki, Nishisonogi-gun Nagasaki 851-2121 (JP)
(74) Representative: Grünecker Patent- und Rechtsanwälte PartG mbB
(86) International application number: PCT/JP2016/062321
(87) International publication number: WO 2016/171113

(56) References cited:
- EP-A2- 1 937 511
- WO-A1-2005/014439
- CN-A- 101 020 527
- JP-A- 2006 143 329
- JP-A- 2006 143 329
- JP-A- 2007 145 334
- JP-U- S62 167 792
- US-A1- 2011 197 401

## Description

### TECHNICAL FIELD

The present invention relates to container-securing devices for fixing containers which are stacked one another, and/or for fixing containers onto a cargo bed of a trailer or a railroad freighter.

### BACKGROUND ART

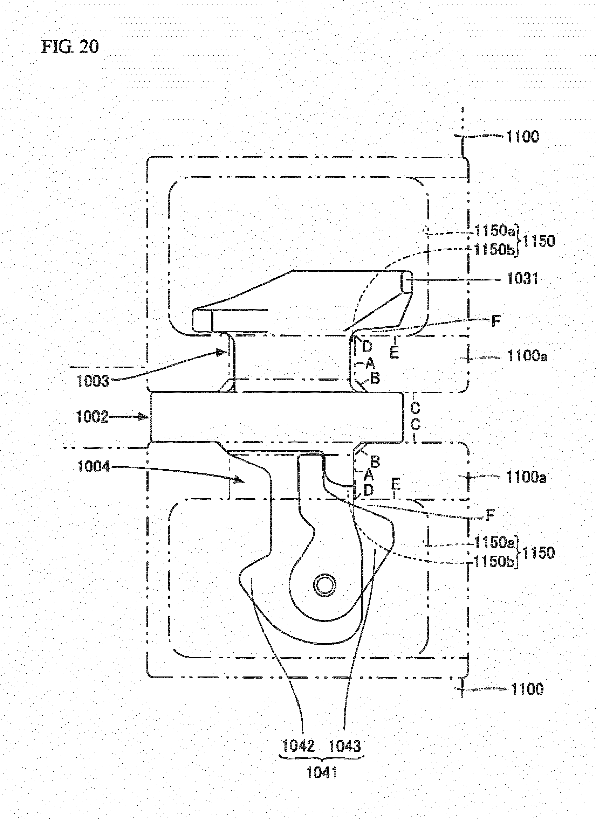

Patent Literature 1 discloses a container-securing device of a so called latch-lock type. As shown in Fig. 20, the container-securing device includes: a flange 1002 disposed between upper and lower corner castings 1100a of stacked containers 1100; an upper support pillar 1003 and a lower support pillar 1004 protruding from the flange 1002; an upper cone 1031 provided for engagement with a groove hole 1150 in the upper corner casting 1100a; and a lower cone 1041 provided for engagement with the groove hole 1150 in the lower corner casting 1100a. The lower cone 1041 includes a fixed protrusion 1042, and a movable protrusion (latch) 1043 which is provided on the side away from the fixed protrusion 1042. The movable protrusion is inserted into the groove hole of the corner casting automatically by an elastic force of an elastic member.

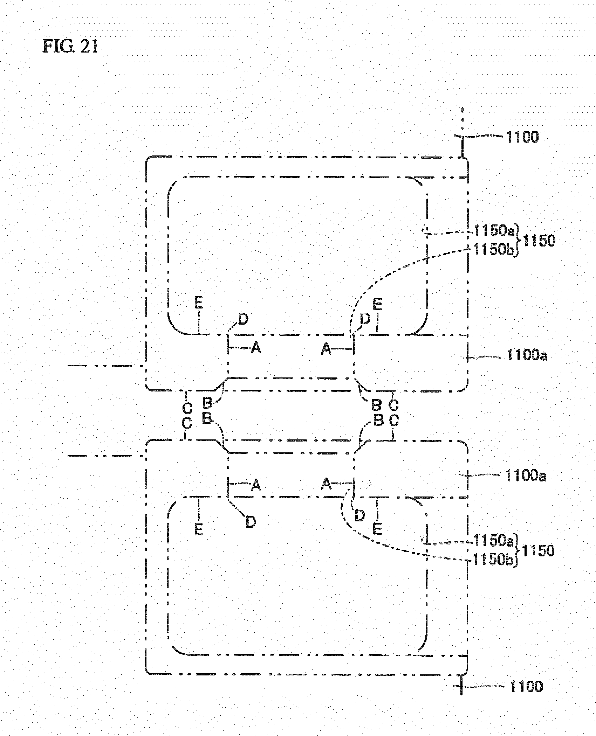

As shown also in Fig. 21, the groove hole 1150 of the corner casting 1100a has a hollow 1150a which is formed as an inner space defined by surrounding walls of the corner casting 1100a, and a mouth 1150b which is formed in the surrounding walls, communicates with the hollow 1150a, is like a long hole and smaller than the hollow 1150a. The mouth 1150b has a mouth vertical surface region A which is provided by a wall thickness of the surrounding walls; an entrance corner region B (tapered region) which is at an entrance side of the mouth vertical surface region A; an outer surface region C which is perpendicular to the mouth vertical surface region A and leads to the entrance corner region B; a far corner region D which is at a far end of the mouth vertical surface region A; an inner surface region E which is perpendicular to the mouth vertical surface region A and leads to the far corner region D; etc.

Patent Literature 2 and Patent Literature 3 both disclose similar container-securing devices of the latch-lock type.

### CITATION LIST

### PATENT LITERATURE

Patent Literature 1: JP-B No. 4781786 Gazette
Patent Literature 2: JP 2006 143329 A
Patent Literature 3: US 2011/197401 A1

### SUMMARY OF INVENTION

### TECHNICAL PROBLEM

When the container-securing device disclosed in Patent Literature 1 is in its locked state where the upper cone 1031 is fitted into the groove hole 1150 of the corner casting 1100a, there is a gap (play) F from the upper cone 1031 to the far corner region D, and to the inner surface region E. Also, in its locked state where the lower cone 1041 is fitted into the groove hole 1150 of the corner casting 1100a, there is a gap F from the movable protrusion 1043 to the far corner region D, and to the inner surface region E.

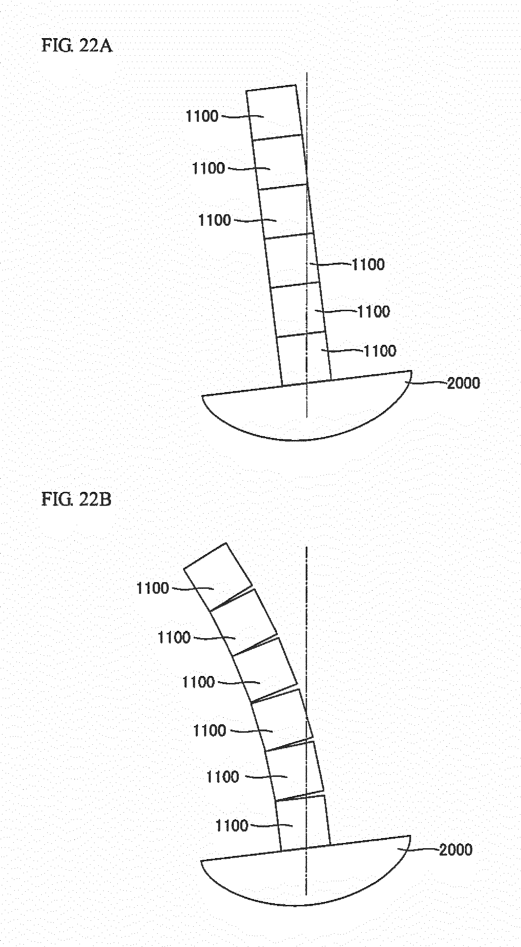

As shown in Fig. 22A, in cases where the containers 1100 are stacked on a ship 2000, the containers 1100 tilt as the ship 2000 rolls. If the gap F is zero in this situation, the tilt of the container 1100 is generally the same as the tilt of the ship 2000. However, if there is the gap F at each of the fixing locations in the upper and the lower containers 1100, 1100 as shown in Fig. 22B, the tilt caused by the gap F accumulates in the containers at higher levels, and it is not possible to prevent those containers 1100 at higher levels from tilting more than the ship 2000. In other words, the above-described conventional container-securing device has a problem that the gap F makes it difficult to stack a large number of containers, leading to a high cost in transporting containers.

In consideration to the above-described problems, an object of the present invention is to decrease the gap between the container-securing device and the corner casting.

### SOLUTION TO PROBLEM

In order to achieve the above-described object, the present invention provides a container-securing device according to claim 1 which includes: a flange located on an outer side of a groove hole in a corner casting of a container; a support pillar provided in the flange for fitting in a mouth of the groove hole; and a fitting portion provided in the support pillar for fitting into a hollow of the groove hole. The fitting portion is provided with a movable protrusion which is pivotable on a horizontal shaft provided horizontally in the support pillar and is urged to protrude laterally out of a vertical surface portion of the support pillar. With this arrangement, a locked state is achieved when the flange comes in contact with an outer surface region of the corner casting, and the movable protrusion comes in contact with a far corner region which is at a far end of the mouth at some point when the movable protrusion pivots.

The arrangement decreases the gap between the movable protrusion and the groove hole because the locked state is achieved when the flange comes in contact with the outer surface region of the corner casting, and the movable protrusion comes in contact with the far corner region which is at the far end of the mouth at some point when the movable protrusion pivots. The arrangement makes it possible to stack a large number of containers, and offers such an advantage that transportation cost of the containers is reduced. In the locked state, the movable protrusion is during its pivoting process, and therefore as the container-securing device is detached from the corner casting, the movable protrusion can pivot further while making contact with the far corner region. The pivoting movement of the movable protrusion during the detachment allows the corner casting and the container-securing device to separate from each other in mutually oblique directions, whereby it is possible to provide an initial step for the support pillar and the movable protrusion to pass through the mouth. In other words, an operation to lift the container causes automatic detachment of the container-securing device from the corner casting.

The support pillar may be formed with a support-pillar-side tapered region for making contact with a groove-hole-side tapered region which extends from the outer surface region of the corner casting to the mouth of the groove hole. The arrangement helps smoothen the detachment since the support-pillar-side tapered region is guided in the oblique direction along the groove-hole-side tapered region.

The container-securing device may further includes a stopper for limiting pivotal movement of the movable protrusion in maintaining the locked state. The arrangement makes it impossible to automatically detach the container-securing device from the corner casting, and therefore eliminates unintended unlocking.

The flange may be fixed or detachably attached onto a cargo bed. The arrangement makes it possible to use the container-securing device in fixing containers onto the cargo bed of a trailer and the like.

The container-securing device may further include: a second support pillar provided in the flange for fitting into the mouth of the groove hole in another corner casting; and a second fitting portion provided in the second support pillar for fitting into the hollow of said groove hole, for connecting two, mutually stacked containers. With this, there may be a further arrangement that when the second fitting portion is in a locked state, the flange is in contact with an outer surface region of said another corner casting.

The second support pillar may be provided with a pushing member. With this arrangement, the second fitting portion is formed with a sloped region for the pushing member to push a mouth vertical surface region of the corner casting to cause the sloped region to be pressed onto the far corner region at the far end of the mouth of the corner casting.

The arrangement makes it possible to decrease the gap between the second fitting portion and the groove hole since the sloped region of the second fitting portion is pushed by the pushing member and brought in contact with the far corner region of the corner casting at the far end of the mouth. The arrangement makes it possible to stack a large number of containers, and offers such an advantage that transportation cost of the containers is reduced.

### ADVANTAGEOUS EFFECTS OF INVENTION

The present invention decreases a gap between a container-securing device and a corner casting. The arrangement makes it possible to stack a large number of containers, and offers an advantage that transportation cost of the containers is reduced. Further, decreasing the gap means that there is a fewer number of loading materials involved, which helps decrease the weight, and also shorten the loading time. Also, fuel economy of the container transporter ship can be expected to improve, with less damage to the ship as well. Further, decreasing the gap means that movement of the containers caused by sudden roll for example will cease more quickly, and this decreases accelerated load. Consequently, it is possible to decrease damage to the containers and the container-securing devices.

### BRIEF DESCRIPTION OF DRAWINGS

Fig. 1 is an explanatory view which shows a container-securing device according to an embodiment of the present invention, a corner casting on a lower surface of an upper container in a stack, and another corner casting on an upper surface of a lower container in the stack.
Fig. 2 is a schematic bottom view of the container-securing device in Fig. 1.
Fig. 3 is a schematic front view of the container-securing device in Fig. 1.
Fig. 4 is a schematic explanatory view which shows an upper support pillar, an upper fitting portion and a pushing member of the container-securing device in Fig. 1.
Fig. 5 is an explanatory view for describing how the upper fitting portion of the container-securing device in Fig. 1 is attached to a groove hole of the corner casting.
Fig. 6 is an explanatory view for describing how the upper fitting portion of the container-securing device in Fig. 1 is attached to the groove hole of the corner casting.
Fig. 7 is a schematic explanatory view which shows another example of the pushing member attached to the upper fitting portion of the container-securing device in Fig. 1.
Fig. 8 is an explanatory view which shows how a lower support pillar and a lower fitting portion of the container-securing device in Fig. 1 are detached from a lower corner casting.
Fig. 9 is an explanatory view which shows how the lower support pillar and the lower fitting portion of the container-securing device in Fig. 1 are detached from the lower corner casting.
Fig. 10 is an explanatory view which shows how the lower support pillar and the lower fitting portion of the container-securing device in Fig. 1 are detached from the lower corner casting.
Fig. 11 is an explanatory view which shows how the lower support pillar and the lower fitting portion of the container-securing device in Fig. 1 are detached from the lower corner casting.
Fig. 12 is a schematic bottom view which shows a container-securing device according to another embodiment.
Fig. 13 is a schematic front view of the container-securing device in Fig. 12.
Fig. 14 is an explanatory view which shows the container-securing device in Fig. 12, a corner casting on a lower surface of an upper container in a stack, and another corner casting on an upper surface of a lower container in the stack.
Fig. 15A is a plan view of a stopper device used in the container-securing device in Fig. 12.
Fig. 15B is a front view of the stopper device used in the container-securing device in Fig. 12.
Fig. 16 is a schematic perspective view of the container-securing device in Fig. 12.
Fig. 17 is another schematic perspective view of the container-securing device in Fig. 12.
Fig. 18A is a schematic front view which shows that the stopper device maintains a locked state of the container-securing device in Fig. 12.
Fig. 18B is a schematic front view which shows a state where the stopper device of the container-securing device in Fig. 12 is released.
Fig. 19 is an explanatory view which shows a container-securing device according to still another embodiment.
Fig. 20 is an explanatory view which shows a conventional container-securing device.
Fig. 21 is an explanatory view which shows corner castings of an upper and a lower containers.
Fig. 22A is an explanatory view which shows how a stack of containers would tilt if there were no gap between each pair of a container and a container-securing device.
Fig. 22B is an explanatory view which shows how a stack of containers will tilt if there is a gap between each pair of a container and a container-securing device.

### DESCRIPTION OF EMBODIMENTS

Hereinafter, embodiments of the present invention will be described with reference to the attached drawings.

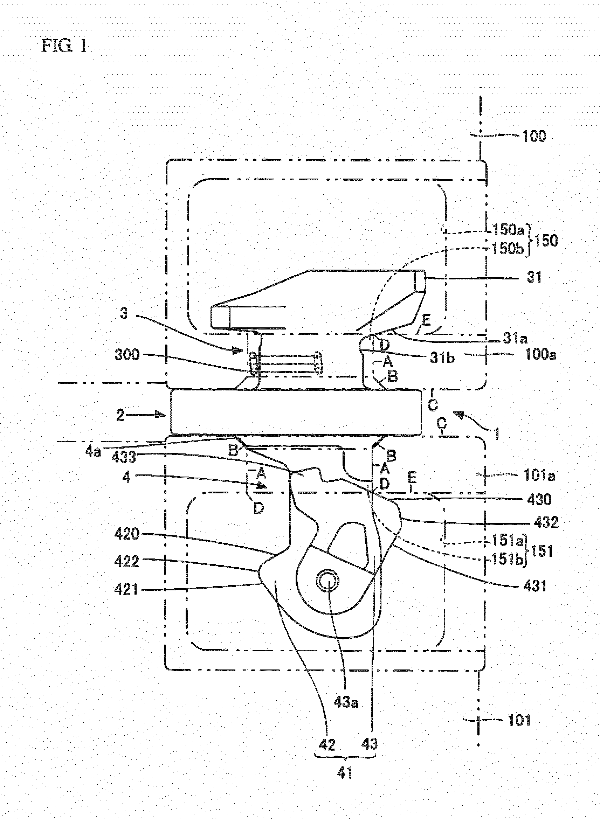

As shown in Fig. 1, an upper container 100 has a corner casting 100a at a corner of its lower surface, whereas a lower container 101 has a corner casting 101a at a corner of its upper surface. A container-securing device 1 is between the corner casting 100a and the corner casting 101a, and fixes the upper container 100 and the lower container 101 with each other.

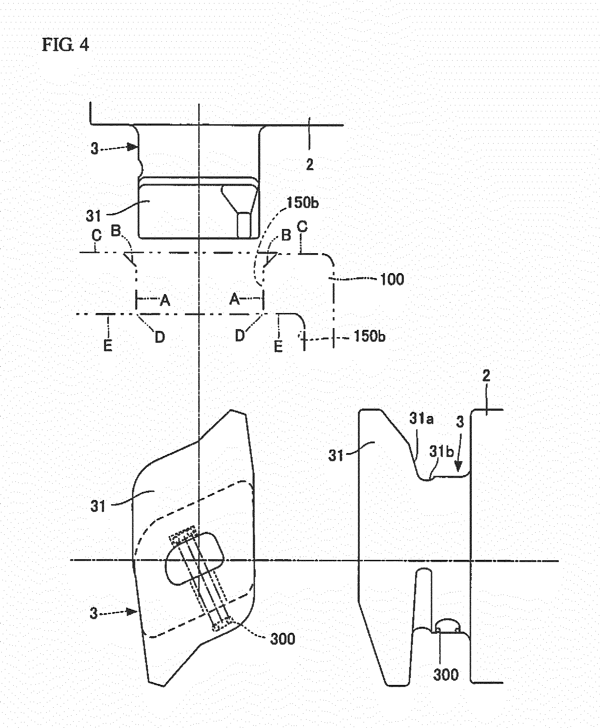

The corner casting 100a is formed with a groove hole 150, which has a hollow 150a formed as an inner space defined by surrounding walls of the corner casting 100a, and a mouth 150b which is formed in the surrounding walls, communicates with the hollow 150a, and is like a long hole smaller than the hollow 150a. The mouth 150b has a mouth vertical surface region A which is provided by a wall thickness of the surrounding walls; an entrance corner region B (tapered region) which is at an entrance side of the mouth vertical surface region A; an outer surface region C which is perpendicular to the mouth vertical surface region A and leads to the entrance corner region B; a far corner region D which is at a far end of the mouth vertical surface region A; an inner surface region E which is perpendicular to the mouth vertical surface region A and leads to the far corner region D; etc. (see Fig. 4).

Likewise, the corner casting 101a is formed with a groove hole 151, which has a hollow 151a formed as an inner space defined by surrounding walls of the corner casting 101a, and a mouth 151b which is formed in the surrounding walls, communicates with the hollow 151a, and is like a long hole smaller than the hollow 151a. The mouth 151b has a mouth vertical surface region A which is provided by a wall thickness of the surrounding walls; an entrance corner region B (groove-hole-side tapered region) which is at an entrance side of the mouth vertical surface region A; an outer surface region C which is perpendicular to the mouth vertical surface region A and leads to the entrance corner region B; a far corner region D which is at a far end of the mouth vertical surface region A; an inner surface region E which is perpendicular to the mouth vertical surface region A and leads to the far corner region D; etc.

The container-securing device 1 has a flange 2. The flange 2 comes on an outer side of the groove holes 150, 151 of the corner castings 100a, 101a. The flange 2 has an upper support pillar (second support pillar) 3 on its upper surface, and a lower support pillar (support pillar) 4 on its lower surface. When the container-securing device 1 is in a locked state, the flange 2 is in contact with the outer surface region C of the corner castings 100a, 101a. The lower support pillar (support pillar) 4 is formed, at its border region from the flange 2, with a support-pillar-side tapered region 4a which is sloped along a slope in the entrance corner region B (groove-hole-side tapered region) and is in contact with the entrance corner region B.

The upper support pillar 3 is provided, on its upper side, with an upper cone (second fitting portion) 31. The upper support pillar 3 fits into the mouth 150b, whereas the upper cone 31 fits into the hollow 150a. The lower support pillar 4 is provided, on its lower side, with a lower cone (fitting portion) 41. The lower support pillar 4 fits into the mouth 151b, whereas the lower cone 41 fits into the hollow 151a.

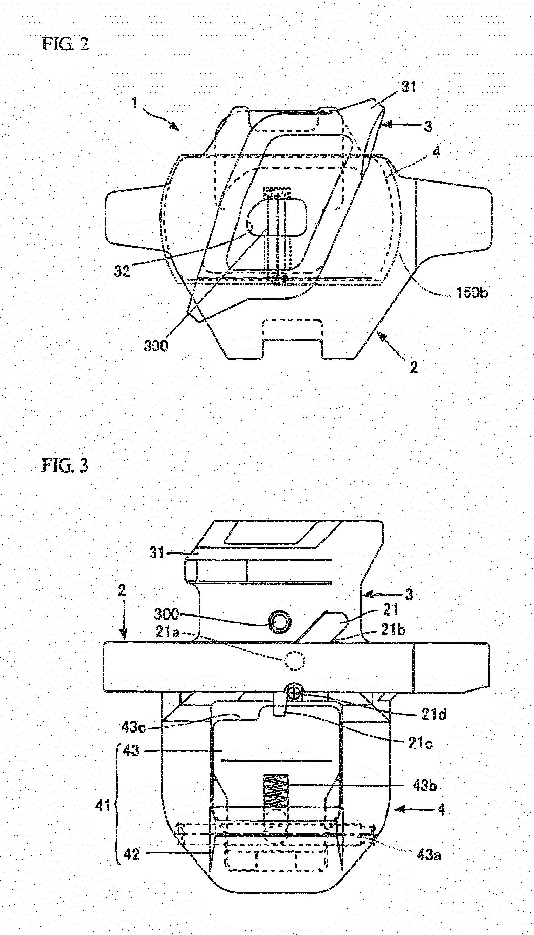

As shown in Fig. 2, the upper support pillar 3 has a cross section similar to a parallelogram, and it is possible to rotate this upper support pillar 3 within the hollow 150a of the groove hole 150 in the corner casting 100a. The flange 2 is provided with a fixing lever 21, as shown also in Fig. 3, which is operated to protrude its upper portion into the mouth 150b of the groove hole 150, so that the upper cone 31 is fixed in the groove hole 150.

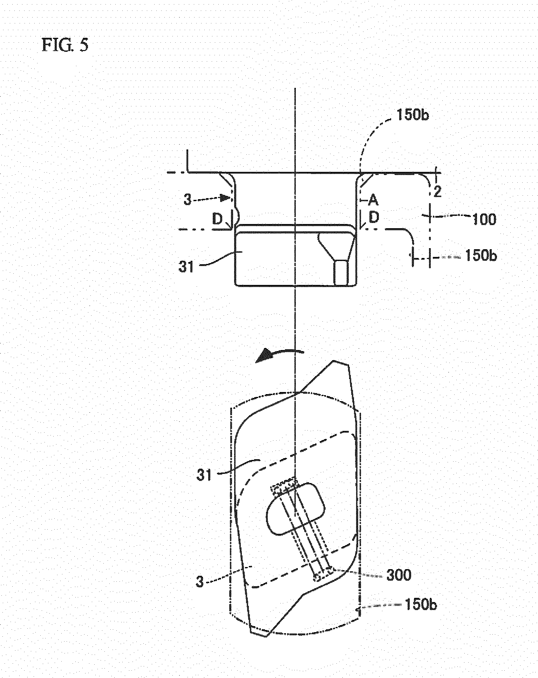

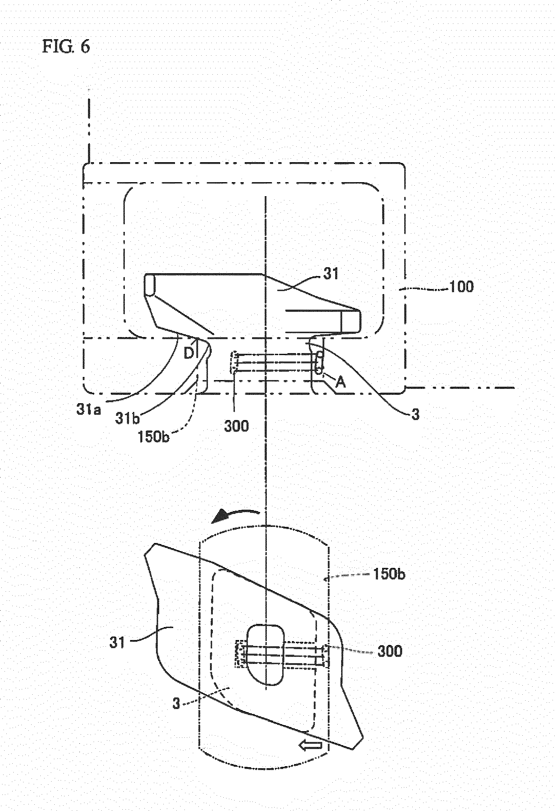

When the upper cone 31 is inserted into the groove hole 150, as shown in Fig. 4 and Fig. 5, a long side of the upper cone 31 is aligned with a long side of the mouth 150b, and the container-securing device 1 is tilted to insert the upper cone 31 through the mouth 150b into the hollow 150a. Then, as shown in Fig. 6, the container-securing device 1 is rotated by approximately 90 degrees within a horizontal plane. The rotation brings the long side of the upper cone 31 across the long side of the mouth 150b which is like a long hole.

As shown in Fig. 3, the fixing lever 21 is pivotably supported by a horizontal shaft 21a, and its upper portion is protruded out of the upper surface of the flange 2 by an elastic force of a spring 21b. The fixing lever 21 has its lower portion 21c extending out of the lower surface of the flange 2. By operating the lower portion 21c, it is possible to retract the upper portion of the fixing lever 21 to the flange 2 side. It should be noted here that the pivotal movement of the fixing lever 21 is stopped when the lower portion 21c makes contact with a pin 21d which is provided on the lower surface of the flange 2.

As shown in Fig. 6 and others, the upper support pillar 3 has a pushing member 300 for pushing the mouth vertical surface region A which is part of the mouth 150b of the corner casting 100a. The pushing member 300 is provided, for example, by a coil spring and is inserted into a horizontal hole formed in a vertical surface region of the upper support pillar 3. Under a natural state, the pushing member 300 protrudes from the vertical surface region, makes contact with the mouth vertical surface region A and pushes the mouth vertical surface region A when the long side of the upper cone 31 is across the long side of the mouth 150b which is like a long hole.

The upper cone 31 is formed with a sloped region 31a facing the flange 2. The sloped region 31a is designed so that one of its ends can be within the hollow 150a while the other can be within the mouth 150b. Said other end has its border region from the upper support pillar 3, formed with a recess 31b so that the sloped region 31a is not prevented from contacting the far corner region D.

When the container-securing device 1 is rotated by approximately 90 degrees within a horizontal plane as has been described earlier, the pushing member 300 comes in contact with the mouth vertical surface region A to push the mouth vertical surface region A. The push causes the sloped region 31a to be pressed away from the mouth vertical surface region A, onto the far corner region D on the opposite side.

As shown in Fig. 2, there is a vertical hole 32 formed in the upper support pillar 3 and the upper cone 31, and the vertical hole 32 is formed, in its inner wall, with a receptacle recess in which a base end portion of the pushing member 300 is held. The pushing member 300 is visible from the vertical hole 32. So, for example, a tool may be inserted from the vertical hole 32 to crimp part of the pushing member 300 to prevent the pushing member 300 from dropping. Also, for example, the pushing member 300 may be provided with a contact member at its tip to make contact with the mouth vertical surface region A, rather than having the pushing member 300 itself make contact with the mouth vertical surface region A.

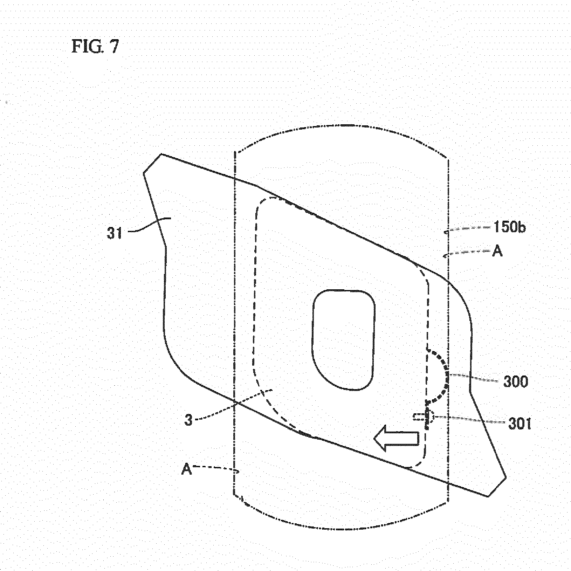

The pushing member 300 may be provided by a leaf spring. In the case where the pushing member 300 is a leaf spring, the spring has a curved spring portion and a fastener portion as shown in Fig. 7 for example, and a screw 301 is inserted through the fastener portion to fix the spring to the upper support pillar 3.

As shown in Fig. 1, the lower support pillar 4 is formed with vertical surfaces portion in parallel to the long sides of the mouth 151b. The lower cone 41 has, like in the container-securing device disclosed in Patent Literature 1 (JP-B 4781786 Gazette), a fixed protrusion 42 protruding from one of the vertical surface portions, and a movable protrusion (latch) 43 protruding from the other of the vertical surface portions. The fixed protrusion 42 has its most protruding region, the movable protrusion 43 has its most protruding region, and these two regions are provided at different heights in a vertical position; more specifically, the one in the movable protrusion 43 is closer to the flange 2 (at a higher position) than the one in the fixed protrusion 42.

The fixed protrusion 42 has a first sloped surface 420, a second sloped surface 421 and a convex peak 422 between these sloped surfaces. The first sloped surface 420 makes contact with the far corner region D at the far end of the mouth 151b when the container is lifted for unloading. The second sloped surface 421 makes contact with the entrance corner region B at the entrance side of the mouth vertical surface region A when the container is lowered for locking. The first sloped surface 420 and the second sloped surface 421 are straight surfaces but this is not limiting; the slopes may be curved or composed of two or more flats. The convex peak 422 comes in contact with the mouth vertical surface region A when the container is lowered for locking/lifted for unloading.

The movable protrusion 43 has a first sloped surface 430, a second sloped surface 431 and a convex peak 432 between these sloped surfaces. The first sloped surface 430 comes in contact with the far corner region D at the far end of the mouth 151b when the container is lowered for locking/lifted for unloading. The second sloped surface 431 comes in contact with the entrance corner region B at the entrance side of the mouth vertical surface region A when the container is lowered for locking/lifted for unloading. The first sloped surface 430 and the second sloped surface 431 are straight surfaces but this is not limiting; the slopes may be curved or composed of two or more flats. Also, the first sloped surface 430 may be roughened with minute peaks and bottoms for example, for decreased slip when the first sloped surface 430 and the far corner region D comes in contact with each other. When the container is lowered for locking/lifted for unloading, the convex peak 432 comes in contact with the mouth vertical surface region A. It should be noted here that the movable protrusion 43 is formed with a pivot stopper portion 433. The pivot stopper portion 433 prevents the movable protrusion 43 from pivoting (protruding) beyond a predetermined amount.

The movable protrusion 43 is pivotable on a horizontal shaft 43a provided horizontally in the lower support pillar 4, is pivoted by an elastic force from a coil spring 43b (see Fig. 3) to protrude in a lateral direction from the vertical surface portion of the lower support pillar 4. When the container is lowered for locking/lifted for unloading, the movable protrusion 43 pivots against the elastic force from the coil spring 43b, temporality retracting to the lower support pillar 4 side. In other words, the movable protrusion 43 makes a state in which it protrudes laterally out of the vertical surface portion of the lower support pillar 4, and a state in which it is retracted to the lower support pillar 4 side.

As the flange 2 comes in contact with the outer surface region C (upper surface) of the corner casting 101a, the lower cone 41 enters the groove hole 151, and the movable protrusion 43 is protruded laterally out of the vertical surface portion of the lower support pillar 4, completing the locked state. In the locked state, the movable protrusion 43 urged clockwise as in Fig. 1 by the coil spring 43b is during its pivoting process, the first sloped surface 430 is in contact with the far corner region D at the far end of the mouth 151b, and this state of contact is maintained. The horizontal shaft 43a is not right below the far corner region D, but on a lefter side (closer to the center of the mouth 151b) as in Fig. 1. Also in the locked state where the first sloped surface 430 is in contact with the far corner region D, the first sloped surface 430 is not horizontal but inclined with one end of the first sloped surface 430 being inside the hollow 151a and the other end of the first sloped surface 430 being inside the mouth 151b.

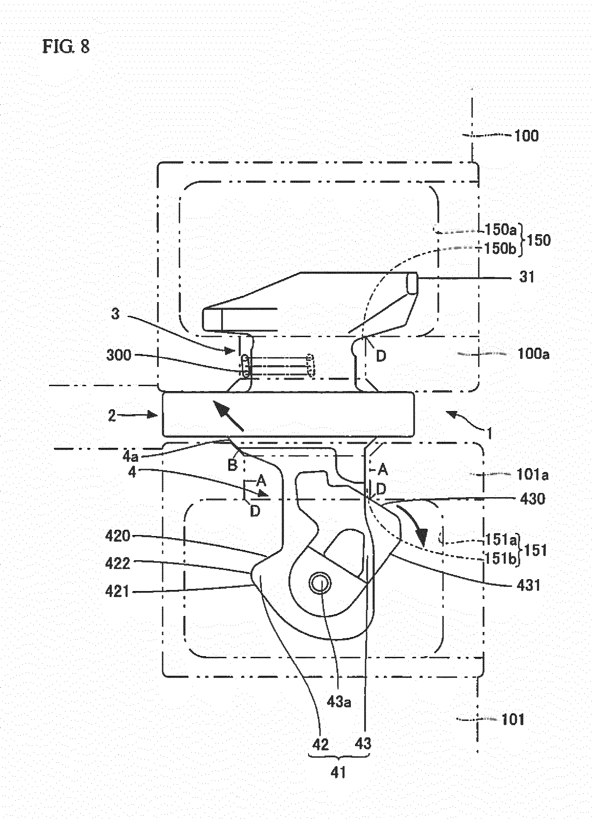

At the time of unloading when the container is pulled out from the locked state shown in Fig. 1, the container-securing device 1 is lifted as shown in Fig. 8, not straightly upward but obliquely (leftward and upward in Fig. 8) along the slope of the entrance corner region B at the side where there is the fixed protrusion 42. In this process, the movable protrusion 43 can pivot further in the clockwise direction under the urge from the coil spring 43b. In other words, the movable protrusion 43 is allowed to pivot further, whereby the container-securing device 1 is lifted obliquely upward along the slope of the entrance corner region B.

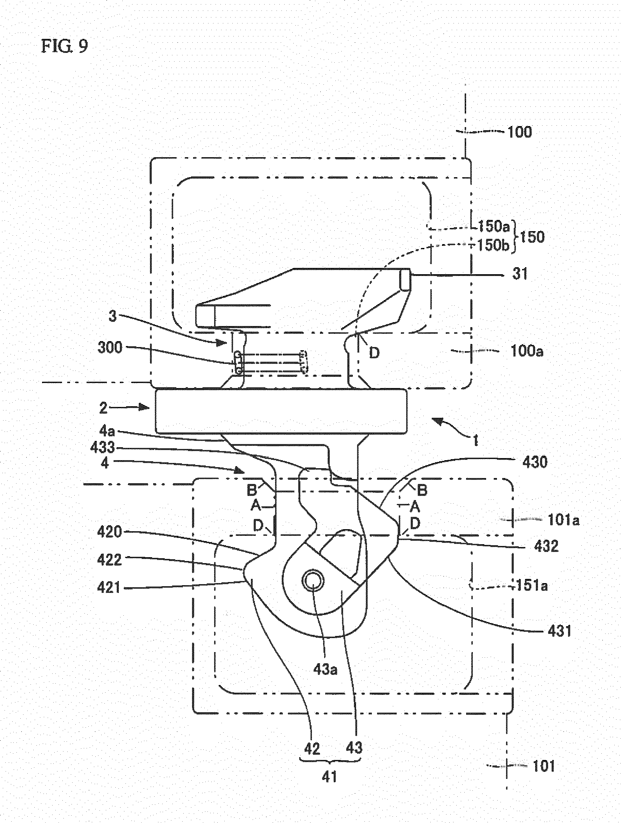

As the movable protrusion 43 pivots further, as shown in Fig. 9, the movable protrusion 43 is then prevented from pivoting furthermore by the pivot stopper portion 433. Under this state where pivotal movement is prevented, there is provided a predetermined clearance because a length (width) from the tip of the convex peak 432 to the vertical surface portion of the lower support pillar 4 behind the peak is slightly shorter than a width of the mouth 151b in its short-side direction. It should be noted here that there may be an arrangement in which such a clearance as described is not provided, and the movable protrusion 43 makes contact with the mouth vertical surface region A when the lower cone 41 passes through the mouth 151b.

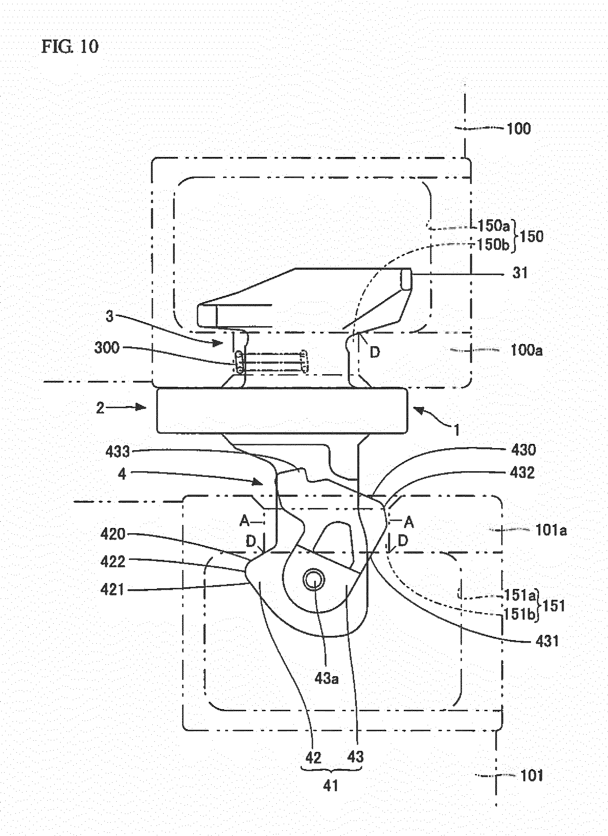

As the container-securing device 1 is lifted further, as shown in Fig. 10, the first sloped surface 420 of the fixed protrusion 42 makes contact with the far corner region D, and therefore the device is lifted along the slope in the first sloped surface 420, obliquely upward (rightward and upward in Fig. 10). Also, due to this movement, the movable protrusion 43 pivots counterclockwise.

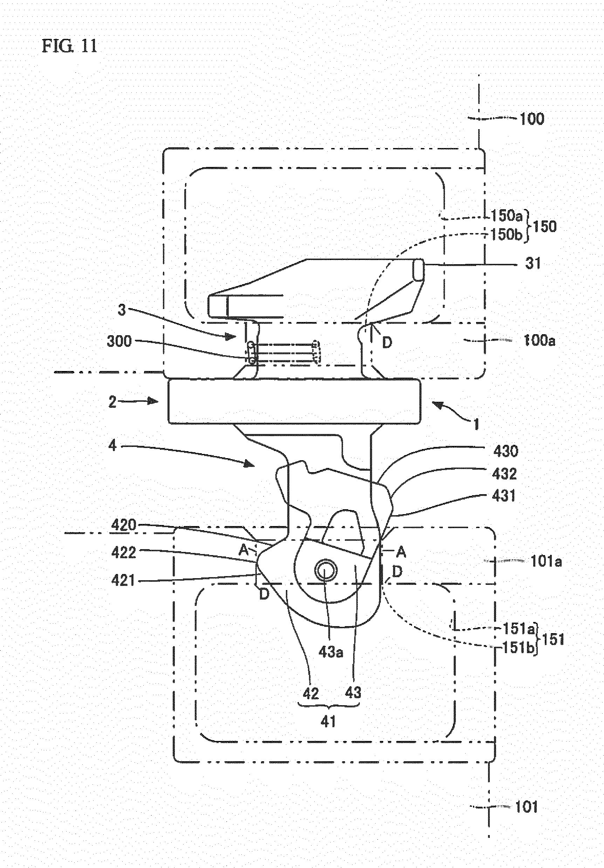

As the container-securing device 1 is lifted further, as shown in Fig. 11, the convex peak 422 moves while keeping contact with the mouth vertical surface region A. There is provided a predetermined clearance because a length (width) from the tip of the convex peak 422 to the vertical surface portion of the lower cone 41 behind the convex peak 422 is slightly shorter than the width of the mouth 151b in its short-side direction.

According to the above-described arrangement, it is possible to decrease a gap between the movable protrusion 43 and the groove hole 151 since a locked state is achieved when the flange 2 comes in contact with the outer surface region C of the corner casting 101a, and the movable protrusion 43 comes in contact with the far corner region D which is at the far end of the mouth 151b at some point when the movable protrusion 43 pivots. The arrangement makes it possible to stack a large number of containers, and offers such an advantage that transportation cost of the containers is reduced. In the locked state, the movable protrusion 43 is during its pivoting process, and therefore as the container-securing device 1 is detached from the corner casting 101a, the movable protrusion 43 can pivot further while making contact with the far corner region D. The pivoting movement of the movable protrusion 43 during the detachment allows the corner casting 101a and the container-securing device 1 to separate from each other in mutually oblique directions, whereby it is possible to provide an initial step for the lower support pillar 4 and the movable protrusion 43 to pass through the mouth 151b. In other words, an operation to lift the container causes automatic detachment of the container-securing device 1 from the corner casting 101a.

The support-pillar-side tapered region 4a helps smoothen the detachment since the support-pillar-side tapered region 4a is guided in the oblique direction along the slope of the entrance corner region B at the side closer to the fixed protrusion 42 when the container-securing device 1 is detached from the corner casting 101a.

Also, the arrangement in which the sloped region 31a is pressed onto the far corner region D of the corner casting makes it possible to stack a large number of containers because the arrangement decreases a gap between the upper fitting portion (the second fitting portion) 31 and the groove hole 150, offering such an advantage that transportation cost of the containers is reduced.

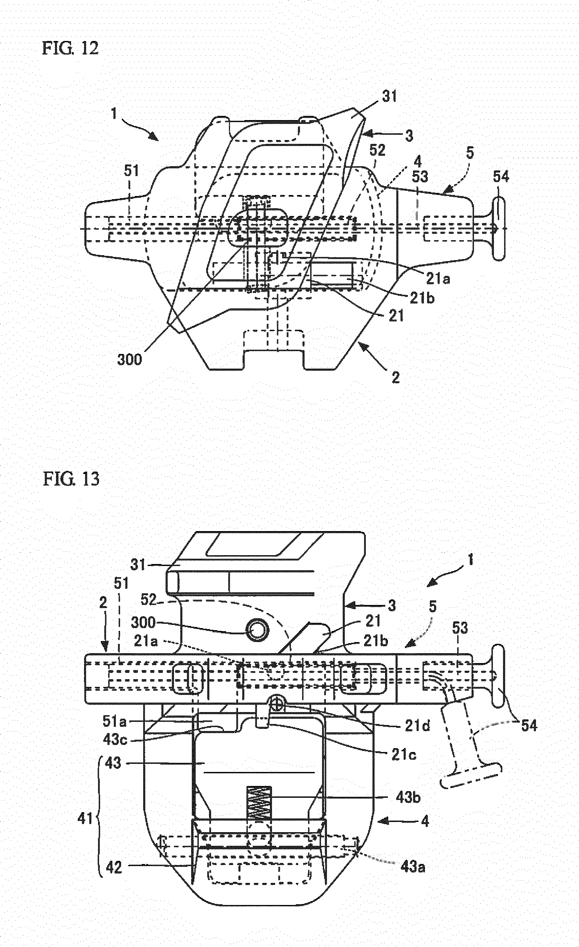

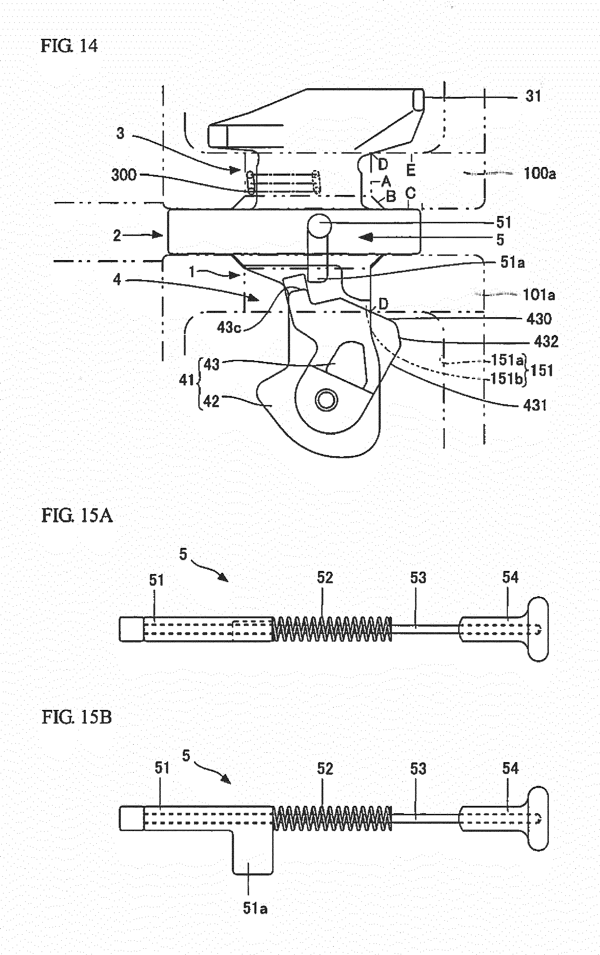

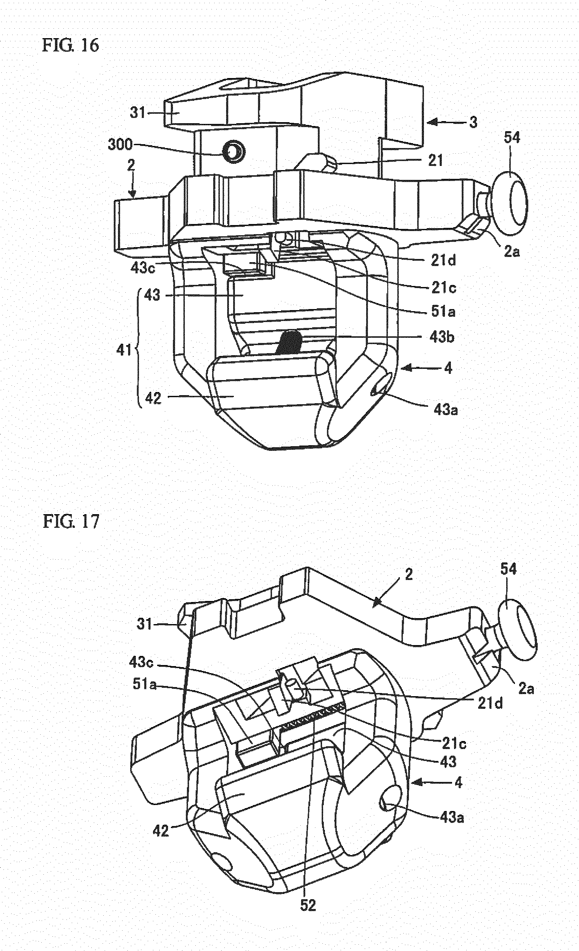

Next, a container-securing device 1 according to another embodiment will be described. As shown in Fig. 12, Fig. 13 and Fig. 14, a container-securing device 1 has a stopper 5 which keeps the movable protrusion 43 in the locked state. As shown also in Fig. 15A and Fig. 15B, the stopper 5 has a moving member 51, a coil spring 52 serving as a second elastic member, a wire 53 serving as a connecting member, and an operation handle 54. The movable protrusion 43 is formed with a cutout 43c, as shown also in Fig. 16 and Fig. 17, on its end facing the flange 2.

The moving member 51 has a cylindrical main body portion, and a stopper piece 51a formed on part of an outer circumference of the main body portion. As the main body portion is guided by a guide formed inside the flange 2, the moving member 51 is slid in a direction parallel to the horizontal shaft 43a. This sliding movement allows the stopper piece 51a to be selectively placed at a position where the cutout 43c is formed, and a position where a contact is made with the movable protrusion 43. It should be noted here that an end of the main body portion in the moving member 51 makes contact with an unillustrated stopping member, so the stopper piece 51a does not slide beyond the place formed with the cutout 43c.

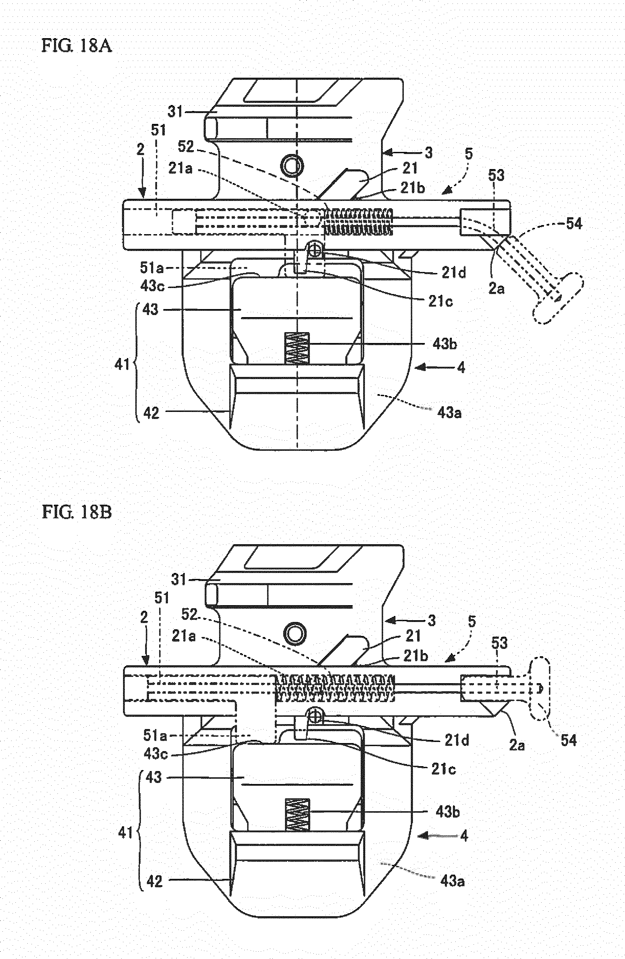

When the moving member 51 is slid to a first position, the stopper piece 51a becomes contactable with the movable protrusion 43, as shown in Fig. 18A, thereby preventing the movable protrusion 43 from pivoting. On the other hand, when the moving member 51 is slid to a second position, the stopper piece 51a comes to the place formed with the cutout 43c as shown in Fig. 18B, thereby allowing the movable protrusion 43 to pivot.

The coil spring 52 is provided inside the flange 2, with one end thereof in contact with a wall of the flange 2 and the other end thereof in contact with an end of the moving member 51, thereby urging the moving member 51 toward the second position to place the stopper piece 51a at the place formed with the cutout 43c. Also, the wire 53 is routed through the coil spring 52, to connect the moving member 51 and the operation handle 54 with each other.

The operation handle 54 is on an outer side of the flange 2. When a worker pulls the operation handle 54 against the urge from the coil spring 52, the moving member 51 slides to the first position. When the worker releases the operation handle 54, a spring force from the coil spring 52 moves the moving member 51 back to the second position.

The operation handle 54 is on a tip of a horizontally protruding extension formed in the flange 2, so that the worker can work on the operation handle 54 between two, mutually stacked containers, on the outermost side thereof as much as possible. Also, the horizontally protruding extension has its tip end formed with a recess which is capable of receiving a projection of the operation handle 54. By keeping the projection in the recess, the operation handle 54 is held stably.

The horizontally protruding extension formed in the flange 2 has its tip also formed with an engager 2a for engagement with the operation handle 54 when the moving member 51 is slid to the first position. The engager 2a is provided by a sloped surface formed on a lower side of the tip of the horizontally protruding extension, and is designed to make contact with a tip of the projection of the operation handle 54 when the handle is pulled out of the recess. Since the coil spring 52 provides a constant pull on the tip of the projection against the sloped surface, the operation handle 54 is caught by the engager 2a. Of course, the engager 2a is not limited to those having a sloped surface.

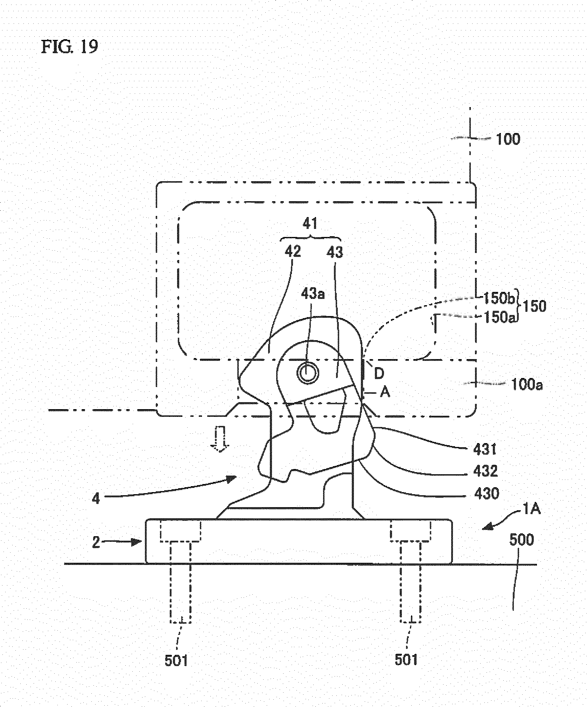

Next, a container-securing device 1 according to still another embodiment will be described. This container-securing device 1 does not have the upper support pillar 3, and is utilized with the first fitting portion (lower cone) 41 facing upward. As shown in Fig. 19, it is possible to fix the flange 2 to a cargo bed 500 of a trailer for example. The fixing may be made with bolts 501 for example, but the invention is not limited to this. Also, for example, the container-securing device 1 may be detachable from/attachable to the cargo bed 500. For example, the container-securing device 1 may be separatably composed of a main body portion and a socket portion, so that the socket portion is fixed to the cargo bed 500. Another embodiment where the flange 2 is fixed to a cargo bed 500 of, e.g., a trailer is that the container-securing device 1 is made separable into a main body portion and a storage portion, so that the main body portion can be stored in the storage portion.

### REFERENCE SIGNS LIST

- 1: Container-Securing Device
- 2: Flange
- 3: Upper Support Pillar (Second Support Pillar)
- 31: Upper Cone (Second Fitting Portion)
- 31a: Sloped Region
- 4: Lower Support Pillar (Support Pillar)
- 4a: Support-Pillar-Side Tapered Region
- 41: Lower Cone (Fitting Portion)
- 42: Fixed Protrusion
- 43: Movable Protrusion
- 43a: Horizontal Shaft
- 43b: Coil Spring
- 43c: Cutout
- 5: Stopper
- 100, 101: Container
- 100a, 101a: Corner Casting
- 150, 151: Groove Hole
- 150a, 151a: Hollow
- 150b, 151b: Mouth
- 300: Pushing Member
- A: Mouth Vertical Surface Region
- B: Entrance Corner Region (Groove-Hole-Side Tapered Region)
- C: Outer Surface Region
- D: Far Corner Region

## Claims

1. A container-securing device (1) comprising: a flange (2) located on an outer side of a groove hole (151) in a corner casting (101a) of a container (101); a support pillar (4) provided in the flange (2) for fitting in a mouth (151b) of the groove hole (151);
a fitting portion (41) provided in the support pillar (4) for fitting into a hollow (151a) of the groove hole (151); wherein
the fitting portion (41) is provided with a movable protrusion (43) which is pivotable on a horizontal shaft (43a) provided horizontally in the support pillar (4) and is urged to protrude laterally out of a vertical surface portion of the support pillar (4), and **characterized by**:
a locked state is achieved when the flange (2) comes in contact with an outer surface region (C) of the corner casting (101a), and the movable protrusion (43) comes in contact with a far corner region (D) which is at a far end of the mouth (151b) of the corner casting (101a) at some point when the movable protrusion (43) pivots.

2. The container-securing device (1) according to Claim 1, wherein the support pillar (4) is formed with a support-pillar-side tapered region (4a) for making contact with a groove-hole-side tapered region (B) which extends from the outer surface region (C) of the corner casting (101a) to the mouth (151b) of the groove hole (151).

3. The container-securing device (1) according to Claim 1 or Claim 2, further comprising a stopper (5) for limiting pivotal movement of the movable protrusion (43) in maintaining the locked state.

4. The container-securing device (1A) according to one of Claim 1 through Claim 3, wherein the flange (2) is attached onto a cargo bed.

5. The container-securing device (1) according to one of Claim 1 through Claim 3, further comprising: a second support pillar (3) provided in the flange (2) for fitting into the mouth (150b) of the groove hole (150) in another corner casting (100a) and a second fitting portion (31) provided in the second support pillar (3) for fitting into the hollow (150a) of said groove hole (150), for connecting two, mutually stacked containers (100, 101).

6. The container-securing device (1) according to Claim 5, wherein the flange (2) is in contact with an outer surface region (C) of said another corner casting (100a), in the locked state.

7. The container-securing device (1) according to Claim 6, wherein the second support pillar (3) is provided with a pushing member (300) and the second fitting portion (31) is formed with a sloped region (31a), for the pushing member (300) to push a mouth vertical surface region (A) of the corner casting (100a) to cause the sloped region (31a) to be pressed onto the far corner region (D) at the far end of the mouth (150b) of the corner casting (100a).

## Patentansprüche

1. Eine Behältersicherungsvorrichtung (1), umfassend: einen Flansch (2), der sich an einer Außenseite eines Nutlochs (151) in einem Eckgussteil (101a) eines Behälters (101) befindet; eine Stützsäule (4), die in dem Flansch (2) zum Einpassen in eine Mündung (151b) des Nutlochs (151) angeordnet ist;
einen Einpassabschnitt (41), der in der Stützsäule (4) angeordnet ist, zum Einpassen in einen Hohlraum (151a) des Nutlochs (151); wobei
der Einpassabschnitt (41) mit einem beweglichen Vorsprung (43) versehen ist, der auf einer horizontalen Welle (43a) schwenkbar ist, die horizontal in der Stützsäule (4) angeordnet ist, und dazu gepresst wird, seitlich aus einem vertikalen Oberflächenabschnitt der Stützsäule (4) herauszuragen und **gekennzeichnet dadurch dass:**
ein Verriegelungszustand erreicht wird, wenn der Flansch (2) mit einem Außenflächenbereich (C) des Eckgussteils (101a) in Kontakt kommt und der bewegliche Vorsprung (43) mit einem entfernten Eckbereich (D), der sich an einem fernen Ende einer Mündung (151b) des Eckgussteil (101a) befinden, zu einem gewissen Punkt in Kontakt kommt, wenn der bewegliche Vorsprung (43) schwenkt.

2. Die Behältersicherungsvorrichtung (1) gemäß Anspruch 1, wobei
die Stützsäule (4) mit einem stützsäulenseitigen abgeschrägten Bereich (4a) zum Herstellen eines Kontakts mit einem nutlochseitigen abgeschrägten Bereich (B) ausgebildet ist, der sich von dem Außenflächenbereich (C) des Eckgussteils (101a) zur Mündung (151b) des Nutlochs (151) erstreckt.

3. Die Behältersicherungsvorrichtung (1) gemäß Anspruch 1 oder Anspruch 2, des weiteren umfassend
einen Anschlag (5) zum Begrenzen der Schwenkbewegung des beweglichen Vorsprungs (43) beim Aufrechterhalten des Verriegelungszustands.

4. Die Behältersicherungsvorrichtung (1) gemäß einem der Ansprüche 1 bis 3, wobei der Flansch (2) auf einer Ladefläche befestigt ist.

5. Die Behältersicherungsvorrichtung (1) gemäß einem der Ansprüche 1 bis 3, des weiteren umfassend:
eine zweite Stützsäule (3), die in dem Flansch (2) angeordnet ist, zum Einpassen in die Mündung (150b) des Nutlochs (150) in einem anderen Eckgussteil (100a), und einen zweiten Befestigungsabschnitt (31), der in der zweiten Stützsäule angeordnet ist (3) zum Einpassen in den Hohlraum (150a) des Nutlochs (150), zum Verbinden zweier übereinander gestapelter Behälter (100, 101).

6. Die Behältersicherungsvorrichtung (1) gemäß Anspruch 5, wobei
der Flansch (2) im Verriegelungszustands mit einem Außenflächenbereich (C) des anderen Eckgussteils (100a) in Kontakt steht.

7. Die Behältersicherungsvorrichtung (1) gemäß Anspruch 6, wobei
die zweite Stützsäule (3) mit einem Schubelement (300) versehen ist und der zweite Befestigungsabschnitt (31) mit einem geneigten Bereich (31a) ausgebildet ist, damit das Schubelement (300) einen vertikalen Mündungsoberflächenbereich (A) des Eckbeschlags (100a) drückt, um zu bewirken, dass der geneigte Bereich (31a) auf den entfernten Eckbereich (D) am fernen Ende der Mündung (150b) des Eckgussteils (101a) gedrückt wird.

## Revendications

1. Dispositif de fixation pour conteneur (1) comprenant : une collerette (2) située sur un côté extérieur d'un trou de rainure (151) dans une ferrure d'angle (101a) d'un conteneur (101) ; un pilier de soutien (4) fourni dans la collerette (2) pour l'ajustement dans une embouchure (151b) du trou de rainure (151) ;
une portion de raccord (41) fournie dans le pilier de soutien (4) pour l'ajustement dans un creux (151a) du trou de rainure (151) ; dans lequel
la portion de raccord (41) est fournie avec une protubérance mobile (43) qui peut tourner sur un arbre horizontal (43a) fourni horizontalement dans le pilier de soutien (4) et qui est sollicité de façon à faire saillie latéralement en dehors d'une portion de surface verticale du pilier de soutien (4), et **caractérisé en ce que** :
un état verrouillé est accompli lorsque la collerette (2) entre en contact avec une région de surface extérieure (C) de la ferrure d'angle (101a), et la protubérance mobile (43) entre en contact avec une région d'angle éloignée (D) qui est à une extrémité éloignée de l'embouchure (151b) de la ferrure d'angle (101a) à un moment donné lorsque la protubérance mobile (43) pivote.

2. Dispositif de fixation pour conteneur (1) selon la revendication 1, dans lequel le pilier de soutien (4) est formé d'une région effilée côté pilier de soutien (4a) pour entrer en contact avec une région effilée côté trou de rainure (B) qui s'étend de la région de surface extérieure (C) de la ferrure d'angle (101a) à l'embouchure (151b) du trou de rainure (151).

3. Dispositif de fixation pour conteneur (1) selon la revendication 1 ou la revendication 2, comprenant en outre une butée (5) pour limiter le mouvement de pivotement de la protubérance mobile (43) en maintenant l'état verrouillé.

4. Dispositif de fixation pour conteneur (1A) selon l'une de la revendication 1 à la revendication 3, dans lequel la collerette (2) est attachée sur une plateforme de chargement.

5. Dispositif de fixation pour conteneur (1) selon l'une de la revendication 1 à la revendication 3, comprenant en outre : un second pilier de soutien (3) fourni dans la collerette (2) pour l'ajustement dans l'embouchure (150b) du trou de rainure (150) dans une autre ferrure d'angle (100a) et une seconde portion de raccord (31) fournie dans le second pilier de soutien (3) pour l'ajustement dans le creux (150a) dudit trou de rainure (150), pour raccorder deux, conteneurs (100, 101) empilés l'un sur l'autre.

6. Dispositif de fixation pour conteneur (1) selon la revendication 5, dans lequel la collerette (2) est en contact avec une région de surface extérieure (C) de ladite autre ferrure d'angle (100a), dans l'état verrouillé.

7. Dispositif de fixation pour conteneur (1) selon la revendication 6, dans lequel le second pilier de soutien (3) est fourni avec un élément de sollicitation (300) et la seconde portion de raccord (31) est formée avec une région inclinée (31a), pour que l'élément de sollicitation (300) pousse une région de surface verticale d'embouchure (A) de la ferrure d'angle (100a) pour amener la région inclinée(31a) à être pressée contre la région d'angle éloignée (D) de l'extrémité éloignée de l'embouchure (150b) de la ferrure d'angle (100a).
